# EUROPEAN PATENT SPECIFICATION

(11) **EP 2 960 143 B1**
(45) Date of publication and mention of the grant of the patent: **12.09.2018**
(21) Application number: 15161460.9
(22) Date of filing: 27.03.2015
(51) Int. Cl.: B62J 1/12, E05B 79/20, F16K 31/46, F16C 1/12

(54) **VEHICLE, OPERATION SYSTEM FOR VEHICLE AND METHOD OF INSTALLING OPERATION SYSTEM TO VEHICLE**
FAHRZEUG, BETRIEBSSYSTEM FÜR EIN FAHRZEUG UND VERFAHREN ZUR INSTALLATION DES BETRIEBSSYSTEM IM FAHRZEUG
VÉHICULE, SYSTÈME DE COMMANDE POUR VÉHICULE ET PROCÉDÉ D'INSTALLATION D'UN TEL SYSTÈME

(30) Priority: 26.06.2014 JP 2014131609
(43) Date of publication of application: 30.12.2015
(73) Proprietor: Yamaha Hatsudoki Kabushiki Kaisha, Iwata-shi, Shizuoka-ken 438 (JP)
(72) Inventor: Nagaoka, Masaki, Shizuoka-ken, 438-8501 (JP); Aoki, Yasushi, Shizuoka-ken, 438-8501 (JP)
(74) Representative: Moreland, David

(56) References cited:
- DE-A1- 10 046 189
- FR-A1- 2 555 333
- GB-A- 294 337
- GB-A- 347 205

## Description

### FIELD OF INVENTION

The present invention relates to a vehicle such as a saddle-type vehicle or saddle-ride vehicle, comprising a mechanism that moves an in-vehicle component by operation of a wire.

### BACKGROUND TO INVENTION

Vehicles having an open and close portion which is openable and closeable by operation of a wire are known. For example, Japanese Patent Application Laid-open No. 2007-176239 (HONDA MOTOR CO LTD) (hereinafter, referred to as "PTL 1") discloses a vehicle having a seat and a filler opening lid which are openable and closeable by operation of two wires, respectively.

The unlocking operation disclosed in PTL 1 is as follows. First, pressing one end (56a) of a swingable seesaw-structured operating arm (56: see FIG. 10A of PTL 1) causes an operating arm (63) to turn and press an abutment portion (65a) to turn first driving arm (65) and pull a wire (80a). Subsequently, pulling the wire (80a) causes an engaging pin (34: see FIG. 5 of PTL 1) to move and unlock a lid lock structure (90). Note that, PTL 1 discloses an operation to unlock a seat lock as well.

The vehicle disclosed in PTL 1, however, requires a mechanism that converts the operation to press the operating arm into the operation to pull the wire because the wire is pulled by pressing the operating arm. For this reason, there arises a problem in that the mechanism that operates the wire is likely to increase in size.

An object of the present invention is a vehicle that downsizes the mechanism that operates a wire.

GB 294,337 (BOWDEN WIRE LTD) which is considered as the closest prior art, discloses a tap, cock or valve comprising, in combination, a valve proper which is opened or actuated by Bowden wire or like mechanism, and a separate filter or cylindrical body made of fine wire gauze or some other suitable material, said Bowden wire or like mechanism including a slidable or movable member which is adapted to be locked, when not required for use, by means of a padlock or the like, which is actuated by a key or is in the form of a permutation lock or some other convenient device.

### SUMMARY OF INVENTION

Various aspects of the present invention are defined in the independent claim. Some preferred or optional features are defined in the dependent claims.

According to an aspect of the present invention, which invention is defined by claim 1, there is provided a vehicle comprising:
an operating member to be pressed for operation;
a wire including one end disposed closer to the operating member than another end of the wire;
a wire cover that slidably covers the wire;
characterized in that
an actuating section that supports one end of the wire cover closer to the one end of the wire and that moves the wire cover in a direction away from the one end of the wire in accordance with the operation to press the operating member; and
a non-actuating section that supports the one end of the wire so that an operation amount of the one end of the wire with respect to a vehicle body is smaller than an operation amount of the actuating section when the operation to press the operating member is performed,
wherein the actuating section and the non-actuating section are configured such that moving the wire cover in a direction away from the one end of the wire in accordance with the operation to press the operating member pulls the other end of the wire.

The present Inventors have studied mechanisms other than the mode that changes a pressing operation into a pulling operation. Employing an operation arm to be pulled by hand for the purpose of pulling a wire does not require any conversion from a pressing operation into a pulling operation, thus making the structure simple. Such an operation arm to be pulled by hand, however, requires two operations including an operation to hold the operation arm and an operation to pull the operation arm, which degrades operability compared with the structure in which the operation arm is pressed. Thus, the present inventors have focused their attention to the wire structure. Wires are provided with wire covers that cover the outside of wires in order to prevent the wires from being in contact with and rubbed by another component during operation of the wires. The present inventors have noticed that, when the wire is puled, the wire cover moves relatively in a direction opposite to the direction in which the wire is pulled when viewed from the wire. Thus, the present inventors have found that operating the wire cover in a direction opposite to the direction in which the wire is pulled, i.e. pressing the wire cover in the direction opposite to the direction in which the wire is pulled, while the wire is fixed to the vehicle body frame causes one end of the wire and one end of the wire cover to relatively operate in the same manner as the related art. At least one embodiment of the present invention may comprise an arrangement where the wire cover is moved in a direction away from the one end of the wire in accordance with the operation of an operating member and can provide a structure in which the wire cover is pressed. Accordingly, the present invention may not require any mechanism that changes the operation to press the operating member into the operation to pull the wire, and thus may downsize the mechanism that operates the wire. Moreover, the present invention may suppress degradation of operability compared with the case where the operating member is pulled, because the wire may be pulled by pressing the operating member. As described above, according to the vehicle of the present invention, the mechanism that operates the wire may be downsized, and degradation of operability may be suppressed.

The vehicle may further include one or more supporting sections that support the wire cover, e.g. on the vehicle body. The supporting section may support a region of the wire cover that is closer to the other end of the wire than the portion of the wire cover supported by the actuating section. At least one of the supporting sections may fix the wire cover, e.g. to the vehicle body.

The one or more supporting sections that support the wire cover on, to or relative to the vehicle body may support a region of the wire cover that is closer to the other end of the wire than the portion of the wire cover supported by the actuating section, and at least one of the supporting sections may fix the wire cover, e.g. to the vehicle body. Thus, the position of the wire with respect to the vehicle body between the portion of the wire cover supported by the actuating section and the supporting section that fixes the wire cover to the vehicle body may not easily change. When the position of the wire changes with respect to the vehicle body, how the wire and the wire cover deform when the actuating section is operated may change. Thus, the operation load required for operating the actuating section may change. Suppression of a change in the position of the wire with respect to the vehicle body may make it possible to suppress a change in the operation load. In other words, the operational feeling may be stabilized.

A supporting section, among the one or more supporting sections, that is closest in distance along the wire to the portion of the wire cover supported by the actuating section may fix the wire cover to the vehicle body.

Accordingly, a supporting section among the supporting sections that is closest in a distance along the wire to the portion of the wire cover supported by the actuating section may fix the wire cover to the vehicle body. Thus, the position of the wire with respect to the vehicle body between the portion of the wire cover supported by the actuating section and the supporting section that fixes the wire cover to the vehicle body may not easily change. When the position of the wire changes with respect to the vehicle body, how the wire and the wire cover deform when the actuating section is operated may change. Thus, the operation load required for operating the actuating section may change. Suppression of a change in the position of the wire with respect to the vehicle body may make it possible to suppress a change in the operation load. In other words, the operational feeling may be stabilized.

The vehicle may further include one or more supporting sections which may support the wire cover on the vehicle body. The supporting section may support a region of the wire cover that is closer to the other end of the wire than the portion of the wire cover supported by the actuating section. The wire cover may bend the wire, e.g. between the portion of the wire cover supported by the actuating section and a supporting section from among the one or more supporting sections that is closest in a distance along the wire to the portion of the wire cover supported by the actuating section.

Accordingly, the one or more supporting sections that support the wire cover support a region of the wire cover that is closer to the other end of the wire than the portion of the wire cover supported by the actuating section, and the wire cover may bend the wire between the portion of the wire cover supported by the actuating section and a supporting section, among the one or more supporting sections that is closest in a distance along the wire to the portion of the wire cover supported by the actuating section. Thus, in a case where the wire is to be operated by pressing the wire cover, bending the wire or changing the degree of the curvature between the portion of the wire cover supported by the actuating section and a region of the wire cover close to the other end of the wire may enable operation of the wire. Moreover, bending the wire in advance may make it easier to bend the wire, which may reduce the operation load of the operating member and may make it possible to stabilize an operational feeling.

The supporting section among the one or more supporting sections that is closest in a distance along the wire to the portion of the wire cover supported by the actuating section may fix the wire cover to the vehicle body.

Accordingly, the supporting section among the one or more supporting sections that is closest in a distance along the wire to the portion of the wire cover supported by the actuating section among the one or more supporting sections may fix the wire cover to the vehicle body. Thus, in a case where the wire is to be operated by pressing the wire cover, bending the wire or changing the degree of the curvature between the portion of the wire cover supported by the actuating section and a region of the wire cover close to the other end of the wire may enable operation of the wire. Moreover, bending the wire in advance may make it easier to bend the wire, which may reduce the operation load of the operating member and may make it possible to stabilize an operational feeling.

The supporting section, among the one or more supporting sections, that is closest in a distance along the wire to the portion of the wire cover supported by the actuating section may be shifted from an actuation axis of the actuating section, e.g. in a direction perpendicular to the actuation axis.

Accordingly, the supporting section, among the one or more supporting sections, that is closest in a distance along the wire to the portion of the wire cover supported by the actuating section is shifted from an actuation axis of the actuating section in a direction perpendicular to the actuation axis. Accordingly, the wire may be easily bent and supported. In addition, the bent wire may be easily controlled in a direction opposite to a direction in which the wire cover moves, e.g. by operation of the operating member.

The operating member may be a sliding operating member.

The vehicle may comprise a plurality of operating members. A respective operating member of the plurality of operating members may be provided for at least may be configured to support a portion of the wire cover and may be configured to move the wire cover in a direction away from the one end of the wire in accordance with the operation of the operating member. The operation system may comprise a non-actuating section, that may be configured to support the one end of the wire, e.g. so that an operation amount of the one end of the wire with respect to a vehicle body is smaller than an operation amount of the actuating section when the operating member is operated.

The operation system may be, comprise or be comprised in a kit or assembly. The operation system may be fittable to a vehicle. The operation system may be comprised in a vehicle, such as a vehicle according to the first aspect.

According to an aspect of the present invention is a method of installing an operation system, such as an operation system of the above aspect, to a vehicle. The method may comprise providing an operating member to be pressed for operation. The method may comprise disposing one end of a wire closer to the operating member than another end of the wire. The method may comprise providing a wire cover for slidably covering the wire. The method may comprise supporting a portion of the wire cover with an actuating section. The actuating section may be configured to move the wire cover in a direction away from the one end of the wire in accordance with the operation of the operating member. The method may comprise supporting the one end of the wire with a non-actuating section, for example so that an operation amount of the one end of the wire with respect to a vehicle body is smaller than an operation amount of the actuating section when the operating member is operated.

It will be appreciated that features analogous to those described above or below in relation to any of the above aspects or below embodiments may be individually and separably or in combination applicable to any of the other aspects or embodiments.

Apparatus features analogous to, or configured to implement, those described above in relation to a method and method features analogous to the use, installation, assembly, repair and manufacture of those described above in relation to an apparatus are also intended to fall within the scope of the present invention.

### BRIEF DESCRIPTION OF DRAWINGS

An embodiment of the present invention will now be described by way of one or each or every single wire, so that, even when the number of wires to be operated increases, the number of operating members may be increased for the number of wires. Thus, a design in accordance with the number of wires may be made possible, which may improve the design freedom.

The vehicle may be or comprise a straddle-type or saddle-ride vehicle or motor vehicle such as a scooter, moped, motorcycle, motorbike, motor tricycle, all-terrain vehicle (ATV) or snowmobile or the like.

A not claimed example provides an operation system for a vehicle, the operation system comprising
an operating member to be pressed for operation;
a wire including one end disposed closer to the operating member than another end of the wire;
a wire cover that slidably covers the wire;
characterized in that
an actuating section that supports one end of the wire cover closer to the one end of the wire and that moves the wire cover in a direction away from the one end of the wire in accordance with the operation to press the operating member; and
a non-actuating section that supports the one end of the wire so that an operation amount of the one end of the wire with respect to a vehicle body is smaller than an operation amount of the actuating section when the operation to press the operating member is performed,
wherein the actuating section and the non-actuating section are configured such that moving the wire cover in a direction away from the one end of the wire in accordance with the operation to press the operating member pulls the other end of the wire.

The operation system may comprise or be comprised in a kit or assembly. The operation system may be fittable to a vehicle. The operation system may be comprised in a vehicle, such as a vehicle according to the first aspect.

Not claimed examples provide a method of installing an operation system, of the above at least one embodiment, to a vehicle. The method may comprise providing an operating member to be pressed for operation. The method may comprise disposing one end of a wire closer to the operating member than another end of the wire. The method may comprise providing a wire cover for slidably covering the wire. The method may comprise supporting a portion of the wire cover with an actuating section. The actuating section may be configured to move the wire cover in a direction away from the one end of the wire in accordance with the operation of the operating member. The method may comprise supporting the one end of the wire with a non-actuating section, for example so that an operation amount of the one end of the wire with respect to a vehicle body is smaller than an operation amount of the actuating section when the operating member is operated.

It will be appreciated that features analogous to those described above or below in relation to any of the above aspects may be individually and separably or in combination applicable to any of the other aspects.

### BRIEF DESCRIPTION OF DRAWINGS

An embodiment of the present invention will now be described by way of example only, with reference to the accompanying drawings, which are:
- **Figure 1**: a side view of a vehicle according to an embodiment of the present invention;
- **Figure 2**: a top view of the vehicle according to the embodiment of the present invention;
- **Figure 3**: a schematic diagram of a wire-lock unlocking mechanism;
- **Figure 4**: a diagram for describing an operation of the wire-lock unlocking mechanism;
- **Figure 5**: a diagram illustrating how a supporting section fixes a wire cover to a vehicle body;
- **Figure 6**: a diagram illustrating how supporting sections support the wire cover; and
- **Figure 7**: a diagram illustrating a position of the supporting section which is closest to an actuating section.

### DETAILED DESCRIPTION OF DRAWINGS

It will be appreciated that the present invention is applicable to vehicles in general and particularly to a straddle-type or saddle-ride vehicle or a motor vehicle. The motorcycle described herein is given as only one example of such a straddle-type vehicle, saddle-ride vehicle or motor vehicle. A straddle-type vehicle, saddle-ride vehicle or motor vehicle as used herein is intended to include the following terms also used in the art:
saddle-ride type vehicle or motor vehicle, saddle-straddling type vehicle or motor vehicle, and includes: motorcycles and motorbikes as well as motor tricycles and All Terrain Vehicles (ATV's), scooter, mopeds and snowmobiles.

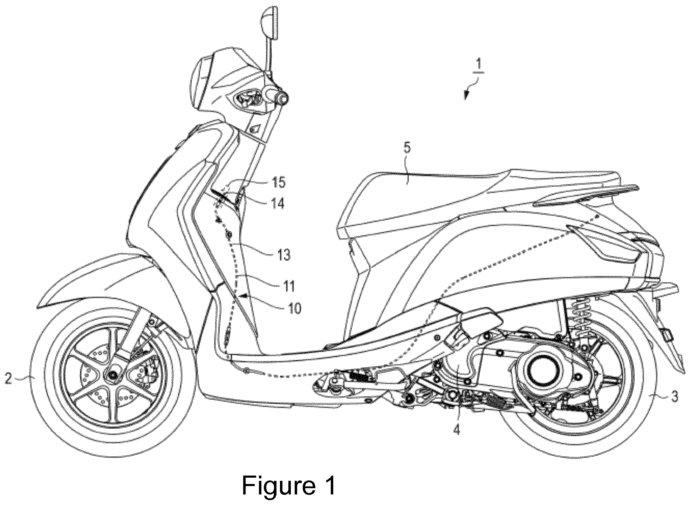

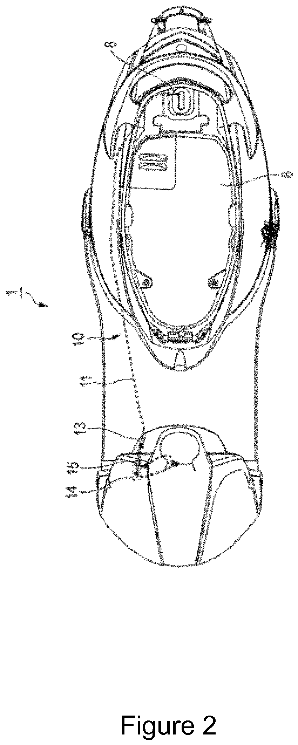

Figure 1 is a side view of a vehicle 1, in the form of a saddle-ride vehicle, in this embodiment a scooter, according to an embodiment of the present invention. Figure 2 is a top view of the vehicle 1 according to the embodiment of the present invention. Note that Figure 2 illustrates a state of the vehicle 1 in which the steering handle, front wheel, seat and the like have been removed. The vehicle 1 according to the embodiment is a so-called scooter-type motorcycle.

The vehicle comprises a front wheel 2, a rear wheel 3, an engine 4 and a seat 5, for example, and a storage box 6 disposed under the seat 5. The storage box 6 is used for storing a helmet, for example, and is formed of an open-top box shape.

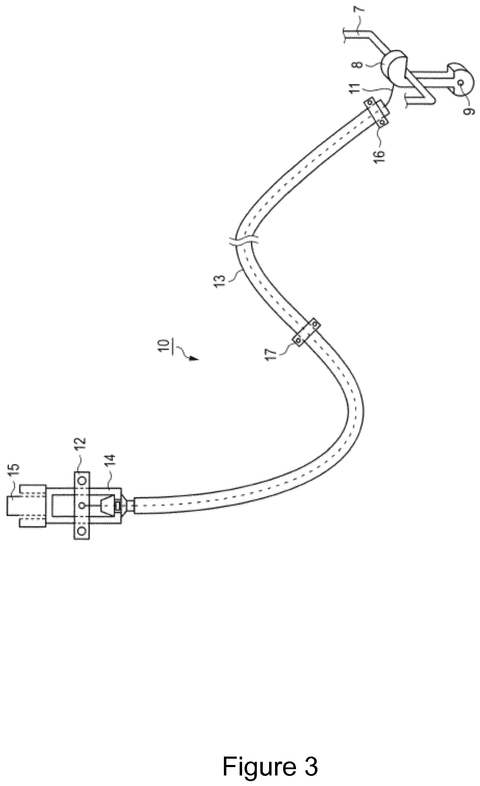

The seat 5 also serves as a lid for opening and closing the top opening of the storage box 6. A seat lock bar 7 for closing the top opening of the storage box 6 using the seat 5 is provided under the seat 5 (see Figure 3).

A hook 8 is provided at a position on a vehicle body side that faces the seat lock bar 7 in a state where the seat 5 closes the top opening of the storage box 6, and configured to lock the seat lock bar 7 (see Figure 3). The hook 8 is turnable around the hinge 9 (see Figure 3) within a certain range. However, a spring is connected to the hook 8, so that the hook 8 stays at a certain orientation due to the elastic force of the spring when no external force acts on the hook 8. Meanwhile, when the seat 5 is opened or closed, an external force greater than the elastic force of the spring acts on the hook 8, so that the hook 8 turns around the hinge 9.

The vehicle 1 includes a wire-lock unlocking mechanism 10 for unlocking the locked seat 5. The wire-lock unlocking mechanism 10 includes a wire 11, a non-actuating section 12, a wire cover 13, an actuating section 14, an operation button 15, and supporting sections 16 and 17. Hereinafter, the wire-lock unlocking mechanism 10 will be described with reference to Figure 3.

In the wire-lock unlocking mechanism 10, one end of the wire 11 is supported by the non-actuating section 12 while the other end of the wire 11 is connected to the hook 8. In addition, the wire 11 is slidably covered by the wire cover 13.

The actuating section 14 is provided to one end of the wire cover 13 near the one end of the wire 11 supported by the non-actuating section 12. The operation button 15 is connected to the actuating section 14. Note that, the operation button 15 may be in contact with the actuating section 14. In addition, the supporting sections 16 and 17 that support the wire cover 13 are provided at the other end and an optional position, e.g. an intermediate position, of the wire cover 13, respectively, and fix the wire cover 13 to the vehicle body, e.g. such that the wire cover 13 is fixed against movement relative to the vehicle body at the location of at least one or each of the supporting sections 16 and 17.

The non-actuating section 12 supports the one end of the wire 11 so that the operation amount of the one end of the wire 11 with respect to the vehicle body becomes smaller than the operation amount of actuating section 14 when the operation to press the operation button 15 is performed. The non-actuating section 12 is fixed to the vehicle body. However, the non-actuating section 12 may not be fixed to the vehicle body, and may be movably supported in this case as long as the operation amount is smaller than the actuating section 14.

The supporting section 17 is provided at a position closest in a distance along the wire 11 to the actuating section 14 and disposed at a position different from an actuation axis of actuating section 14 in a direction perpendicular to the actuation axis. Accordingly, the wire 11 can be easily bent and supported. In addition, the bent wire 11 can be easily controlled in a direction opposite to a direction in which the wire cover 13 moves by the operation to press operation button 15.

The actuating section 14 supports the one end of the wire cover 13 and also moves the wire cover 13 in a direction away from the one end of the wire 11 supported by the non-actuating section 12, in accordance with the operation to press the operation button 15.

The position of the wire 11 with respect to the vehicle body does not easily change between the one end of wire cover 13 supported by the actuating section 14 and the supporting section 17 that fixes the wire cover 13 to the vehicle body. When the position of the wire 11 with respect to the vehicle body changes, how the wire 11 and the wire cover 13 deform when the actuating section 14 is operated changes. Accordingly, the operation load required to operate the actuating section 14 changes. Suppressing such a change in the position of the wire 11 with respect to the vehicle body enables suppressing a change in the operation load, which in turn, makes it possible to stabilize an operational feeling.

The wire 11 is bent between the one end of the wire cover 13 supported by the actuating section 14 and the supporting section 17. In a case where the wire 11 is to be operated by pressing the wire cover 13, the bending wire 11 or changing the degree of the curvature between the portion of the wire cover 13 supported by the actuating section 14 and a region of the wire cover 13 close to the other end of the wire 11 enables operation of the wire 11. Moreover, bending the wire 11 in advance makes it easier to further bend the wire 11, which reduces the operation load of the operation button 15 and makes it possible to stabilize an operational feeling.

The operation button 15 becomes available (i.e. can be pressed) when a key (not illustrated) is inserted into a key cylinder (not illustrated) or when the key lock is unlocked. This configuration is provided for security purpose.

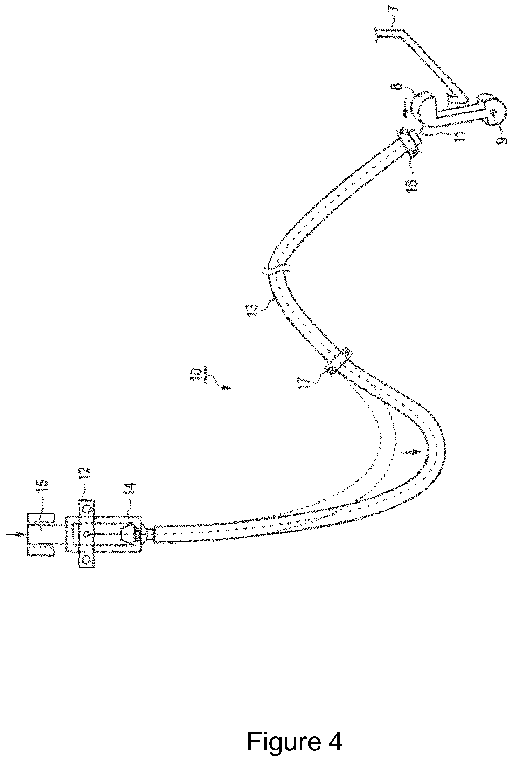

An operation of the wire-lock unlocking mechanism 10 will be described using Figure 4. When the operation button 15 is pressed, the actuating section 14 connected to the operation button 15 moves the wire cover 13 in a direction away from the one end of the wire 11 in accordance with the operation to press the operation button 15. At this time, the actuating section 14 moves the wire cover 13 so that the operation amount of the wire cover 13 with respect to the vehicle body is larger than that of the wire 11.

Since the wire cover 13 is fixed to the vehicle body by the supporting section 17, the degree of curvature of the wire cover 13 moved by the actuating section 14 increases between the actuating section 14 and the supporting section 17.

Since the one end of wire 11 is supported by the non-actuating section 12, the other end of wire 11 is pulled by the wire cover 13 whose degree of curvature has increased between the actuating section 14 and the supporting section 17, and turns the hook 8 connected to the other end of wire 11. The hook 8 removes a latch from the seat lock bar 7 and thus can unlock the storage box 6.

As described above, according to the embodiment, since the one end of wire 11 is supported by the non-actuating section 12, moving the wire cover 13 using the actuating section 14 in a direction away from the one end of wire 11 in accordance with the operation to press operation button 15 makes it possible to pull the other end of the wire 11. Thus, provision of a mechanism that converts a pressing operation into a pulling operation is no longer required, and the mechanism that operates the wire can be downsized. In addition, pressing the operation button 15 makes it possible to pull the wire 11, so that degradation of operability can be suppressed as compared to a case where an operation lever is pulled, for example.

An embodiment of the present invention has been described thus far.

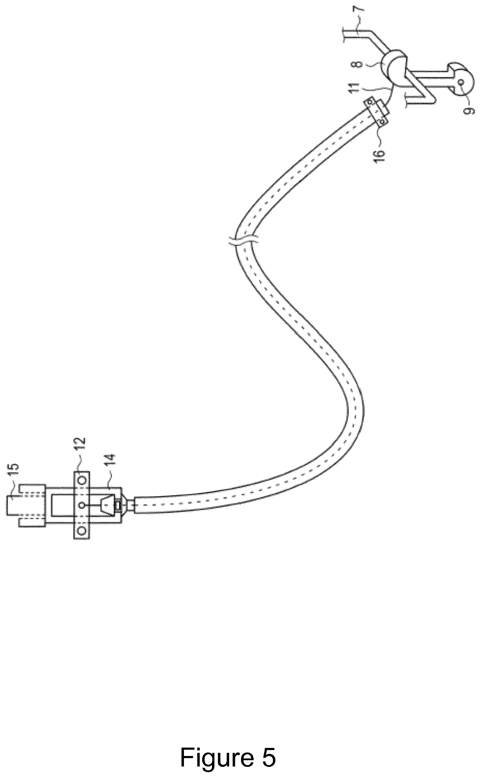

The embodiment has been described using the case where supporting portions 16 and 17 are provided at the other end and at an optional position of the wire cover 13, respectively, and fix the wire cover 13 to the vehicle body. However, the present invention is not limited to this case. For example, as illustrated in Figure 5, a configuration may be employed in which at least one supporting section 16 supports a region of the wire cover 13 near the other end of the wire cover 13 and fixes the wire cover 13 to the vehicle body.

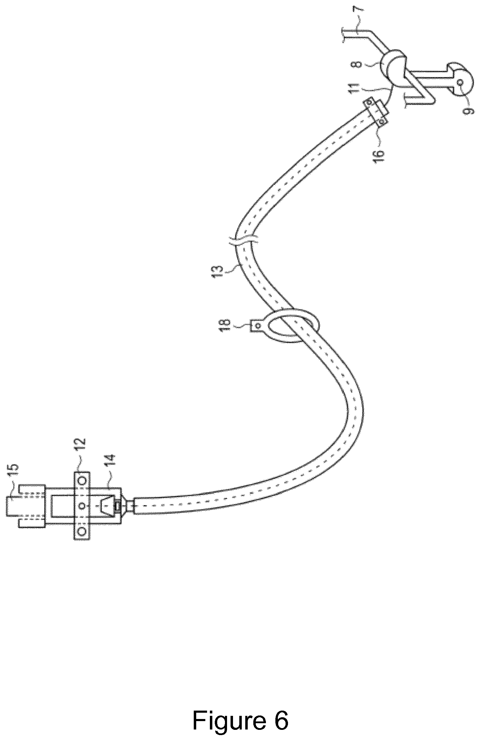

Furthermore, as illustrated in Figure 6, a supporting section 18, such as a loosely fitting loop, may be employed that regulates large movement of the wire cover 13 while allowing for certain movement of the wire cover 13, instead of fixing the wire cover 13 to the vehicle body, for example.

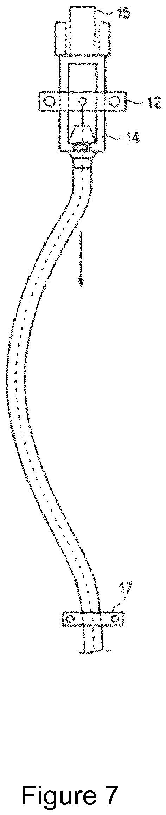

Furthermore, the embodiment has been described using the case where the supporting section 17 which is closest to the actuating section 14 is disposed at a position different from the actuation axis of the actuating section 14 in a direction perpendicular to the actuation axis. The present invention is not limited to this case, however, and as illustrated in Figure 7, the supporting section 17 which is closest to the actuating section 14 may be placed on the actuation axis of the actuating section 14.

In addition, the embodiment has been described using the case where the wire cover 13 extending from the actuating section 14 to the supporting section 17 which is closest to the actuating section 14 is bent. The present invention is not limited to this case, however, and the wire cover 13 extending from the actuating section 14 to the supporting section 17 which is closest to the actuating section 14 may be straight.

In addition, the embodiment has been described using a sliding operating member as the operation button, as an example. The sliding operating member may have a knob and allow the user to slide the knob in a direction to press the actuating section. A sliding operating member as described herein, is provided for every single wire, so that, even when the number of wires to be operated increases, the number of operating members may be increased for the number of wires. Thus, a design in accordance with the number of wires is made possible, which improves the design freedom.

Furthermore, the operating member may be a seesaw operating member (also called a "rocker operating member") other than the sliding operating member. The seesaw operating member includes first and second operation sections and turns around a shaft disposed between the first and the second operation sections. When one of the operation sections that is raised and available (i.e. can be pressed) is pressed, the other operation section is raised and becomes available (i.e. can be pressed). Accordingly, when a seesaw operating member is used, the actuating section of the wire-lock unlocking mechanism is connected to the available operation section (i.e. can be pressed) in an actuatable manner.

In addition, the embodiment has been described using the case where a seat lock is unlocked. However, the present invention is applicable to unlocking a filler neck lid as well, for example.

The present invention is applicable to vehicles and automobiles including a two-wheeled vehicle, three-wheeled vehicle and truck, for example, and also to a snowmobile (snow vehicle), motor tricycles, all-terrain vehicles (ATVs), scooters, mopeds, and the like.

### Reference Signs List

1 Vehicle
2 Front wheel
3 Rear wheel
4 Engine
5 Seat
6 Storage box
7 Seat lock bar
8 Hook
9 Hinge
10 Wire-lock unlocking mechanism
11 Wire
12 Non-actuating section
13 Wire cover
14 Actuating section
15 Operation button
16, 17, 18 Supporting section

## Claims

1. A vehicle (1) comprising:
an operating member (15) to be pressed by a user for operation;
a wire (11) including one end disposed closer to the operating member (15) than an other end of the wire (11);
a wire cover (13) that slidably covers the wire (11); and
an actuating section (14) that supports one end of the wire cover (13) closer to the one end of the wire (11) and that moves the wire cover (13) in a direction away from the one end of the wire (11) in accordance with the operation to press the operating member; and
a non-actuating section (12) that supports the one end of the wire so that an operation amount of the one end of the wire (11) with respect to a vehicle body is smaller than an operation amount of the actuating section (14) when the operation to press the operating member (15) is performed,
a supporting section (16,17) that supports a region of the wire cover (13) that is closer to the other end of the wire (11) than the portion of the wire cover (13) supported by the actuation section (14),
**characterised in that**
said supporting section (16, 17) fixes the wire cover (13) to, or with respect to, the vehicle body,
wherein the actuating section (14) and the non-actuating section (12) are configured such that moving the wire cover (13) in a direction away from the one end of the wire (11) in accordance with the operation to press the operating member increases a degree of curvature of the wire cover (13) between the actuating section (14) and the supporting section (16, 17) and pulls the other end of the wire (11).

2. The vehicle (1) according to claim 1, comprising more supporting sections (16,17,18) that support the wire cover (13) to the vehicle body, wherein
the supporting section (16,17,18) supports a region of the wire cover (13) that is closer to the other end of the wire (11) than the portion of the wire cover (13) supported by the actuating section (14).

3. The vehicle (1) according to claim 2, wherein, among the one or more supporting sections (16,17,18), a supporting section (17) that is closest in a distance along the wire (11) to the portion of the wire cover (13) supported by the actuating section (14) fixes the wire cover (13) to, or with respect to, the vehicle body.

4. The vehicle (1) according to claim 1 comprising more supporting sections (16,17,18) that support the wire cover (13) to the vehicle body, wherein
the supporting section (16,17,18) supports a region of the wire cover (13) that is closer to the other end of the wire (11) than the portion of the wire cover (13) supported by the actuating section (14), and
the wire cover (13) bends the wire (11) between the portion of the wire cover (13) supported by the actuating section (14) and a supporting section (17,18), among the one or more supporting sections (16,17,18), that is closest in distance along the wire (11) to the portion of the wire cover (13) supported by the actuating section (14).

5. The vehicle (1) according to claim 4, wherein the supporting section (17), among the one or more supporting sections (16,17,18), that is closest in distance along the wire (11) to the portion of the wire cover (13) supported by the actuating section (14) fixes the wire cover (13) to the vehicle body.

6. The vehicle (1) according to claim 4 or 5, wherein the supporting section (17,18), among the one or more supporting sections (16,17,18), that is closest in distance along the wire (11) to the portion of the wire cover (13) supported by the actuating section (14) is disposed at a position different or spaced apart from an actuation axis of the actuating section (14) in a direction perpendicular to the actuation axis.

7. The vehicle (1) according to any one of claims 1 to 6, wherein the operating member (15) is a sliding operating member.

## Patentansprüche

1. Fahrzeug (1), Folgendes beinhaltend:
ein Bedienelement (15), das von einem Benutzer zur Bedienung gedrückt werden muss;
einen Draht (11), beinhaltend ein Ende, das näher am Bedienelement (15) angeordnet ist als das andere Ende des Drahtes (11);
eine Drahtabdeckung (13), die den Draht (11) verschiebbar abdeckt; und
einen Betätigungsabschnitt (14), welcher ein Ende der Drahtabdeckung (13) stützt, welches näher an dem einen Ende des Drahtes (11) befindlich ist und welcher die Drahtabdeckung (13) in eine Richtung weg von dem einen Ende des Drahtes (11) in Übereinstimmung mit dem Schritt des Drückens des Bedienelementes schiebt; und
einen Nichtbetätigungsabschnitt (12), welcher das eine Ende des Drahtes in der Weise stützt, dass eine Bedienportion des einen Endes des Drahtes (11) in Bezug auf einen Fahrzeugkörper kleiner ist als eine Bedienportion des Betätigungsabschnittes (14), wenn der Schritt des Drückens des Bedienelementes (15) durchgeführt wird,
einen Stützabschnitt (16, 17), welcher einen Bereich der Drahtabdeckung (13) stützt, welcher näher am anderen Ende des Drahtes (11) befindlich ist als diejenige Portion der Drahtabdeckung (13), welche durch den Betätigungsabschnitt (14) gestützt wird,
**dadurch gekennzeichnet, dass**
der Stützabschnitt (16, 17) die Drahtabdeckung (13) an dem oder in Bezug auf den Fahrzeugkörper befestigt,
wobei der Betätigungsabschnitt (14) und der Nichtbetätigungsabschnitt (12) in der Weise konfiguriert sind, dass Bewegen der Drahtabdeckung (13) in eine Richtung weg von dem einen Ende des Drahtes (11) in Übereinstimmung mit dem Schritt des Drückens des Bedienelementes einen Krümmungsgrad der Drahtabdeckung (13) zwischen dem Betätigungsabschnitt (14) und dem Stützabschnitt (16, 17) erhöht und am anderen Ende des Drahtes (11) zieht.

2. Fahrzeug (1) nach Anspruch 1, beinhaltend mehrere Stützabschnitte (16, 17, 18), welche die Drahtabdeckung (13) am Fahrzeugkörper stützen, wobei
der Stützabschnitt (16, 17, 18) einen Bereich der Drahtabdeckung (13) stützt, welcher näher an dem anderen Ende des Drahtes (11) befindlich ist als diejenige Portion der Drahtabdeckung (13), welche durch den Betätigungsabschnitt (14) gestützt wird.

3. Fahrzeug (1) nach Anspruch 2, bei welchem ein Stützabschnitt (17) unter dem einen oder den mehreren Stützabschnitt(en) (16,17,18), der am nächsten in einem Abstand entlang des Drahtes (11) zu derjenigen Portion der Drahtabdeckung (13) befindlich ist, welche durch den Betätigungsabschnitt (14) gestützt wird, die Drahtabdeckung (13) an dem oder in Bezug auf den Fahrzeugkörper befestigt.

4. Fahrzeug (1) nach Anspruch 1, beinhaltend mehrere Stützabschnitte (16, 17, 18), welche die Drahtabdeckung (13) am Fahrzeugkörper stützen,wobei
der Stützabschnitt (16, 17, 18) einen Bereich der Drahtabdeckung (13) stützt, welcher näher am anderen Ende des Drahtes (11) befindlich ist als diejenige Portion der Drahtabdeckung (13), welche durch den Betätigungsabschnitt (14) gestützt wird, und
wobei die Drahtabdeckung (13) den Draht (11) zwischen derjenigen Portion der Drahtabdeckung (13), welche durch den Betätigungsabschnitt (14) gestützt wird, und einem Stützabschnitt (17, 18) unter dem einen oder den mehreren Stützabschnitt(en) (16,17,18), welcher am nächsten im Abstand entlang des Drahtes (11) zu derjenigen Portion der Drahtabdeckung (13) befindlich ist, welche durch den Betätigungsabschnitt (14) gestützt wird, biegt.

5. Fahrzeug (1) nach Anspruch 4, bei welchem der Stützabschnitt (17) unter dem einen oder den mehreren Stützabschnitt(en) (16, 17, 18), welcher am nächsten im Abstand entlang des Drahtes (11) zu derjenigen Portion der Drahtabdeckung (13) befindlich ist, welche durch den Betätigungsabschnitt (14) gestützt wird, die Drahtabdeckung (13) am Fahrzeugkörper befestigt.

6. Fahrzeug (1) nach Anspruch 4 oder 5, bei welchem der Stützabschnitt (17, 18) unter dem einen oder den mehreren Stützabschnitt(en) (16, 17, 18), welcher am nächsten im Abstand entlang des Drahtes (11) zu derjenigen Portion der Drahtabdeckung (13) ist, welche durch den Betätigungsabschnitt (14) gestützt wird, an einer Position angeordnet ist, welche von einer Betätigungsachse des Betätigungsabschnitts (14) abweicht oder davon in einer Richtung entfernt ist, welche rechtwinklig zur Betätigungsachse verläuft.

7. Fahrzeug (1) nach einem der Ansprüche 1 bis 6, bei welchem das Bedienelement (15) ein verschiebbares Bedienelement ist.

## Revendications

1. Véhicule (1) comprenant :
un élément de commande (15) qui est destiné à être pressé par un utilisateur pour réaliser une commande ;
un câble (11) qui inclut une extrémité qui est disposée plus près de l'élément de commande (15) qu'une autre extrémité du câble (11) ;
un couvre-câble (13) qui recouvre de façon coulissante le câble (11) ; et
une section d'actionnement (14) qui supporte une extrémité du couvre-câble (13) qui est plus près de l'extrémité considérée du câble (11) et qui déplace le couvre-câble (13) dans une direction qui a pour effet de l'éloigner de l'extrémité considérée du câble (11) conformément à la commande pour presser l'élément de commande ; et
une section de non actionnement (12) qui supporte l'extrémité considérée du câble de telle sorte qu'une valeur de commande de l'extrémité considérée du câble (11) par rapport à un corps de véhicule soit plus faible qu'une valeur de commande de la section d'actionnement (14) lorsque la commande pour presser l'élément de commande (15) est réalisée ;
une section de support (16, 17) qui supporte une région du couvre-câble (13) qui est plus près de l'autre extrémité du câble (11) que la section du couvre-câble (13) qui est supportée par la section d'actionnement (14) ;
**caractérisé en ce que** :
ladite section de support (16, 17) fixe le couvre-câble (13) sur le corps de véhicule ou par rapport à celui-ci ;
dans lequel la section d'actionnement (14) et la section de non actionnement (12) sont configurées de telle sorte qu'un déplacement du couvre-câble (13) dans une direction qui a pour effet de l'éloigner de l'extrémité considérée du câble (11) conformément à la commande pour presser l'élément de commande augmente un degré de courbure du couvre-câble (13) entre la section d'actionnement (14) et la section de support (16, 17) et tire l'autre extrémité du câble (11).

2. Véhicule (1) selon la revendication 1, comprenant plusieurs sections de support (16, 17, 18) qui supportent le couvre-câble (13) sur le corps de véhicule ; dans lequel :
la section de support (16, 17, 18) supporte une région du couvre-câble (13) qui est plus près de l'autre extrémité du câble (11) que la section du couvre-câble (13) qui est supportée par la section d'actionnement (14).

3. Véhicule (1) selon la revendication 2, dans lequel, parmi les une ou plusieurs sections de support (16, 17, 18), une section de support (17) qui est la plus près en termes de distance suivant le câble (11) de la section du couvre-câble (13) qui est supportée par la section d'actionnement (14), fixe le couvre-câble (13) sur le corps de véhicule ou par rapport à celui-ci.

4. Véhicule (1) selon la revendication 1, comprenant plusieurs sections de support (16, 17, 18) qui supportent le couvre-câble (13) sur le corps de véhicule ; dans lequel :
la section de support (16, 17, 18) supporte une région du couvre-câble (13) qui est plus près de l'autre extrémité du câble (11) que la section du couvre-câble (13) qui est supportée par la section d'actionnement (14) ; et
le couvre-câble (13) fléchit le câble (11) entre la section du couvre-câble (13) qui est supportée par la section d'actionnement (14) et une section de support (17, 18), prise parmi les une ou plusieurs sections de support (16, 17, 18), qui est la plus près en termes de distance suivant le câble (11) de la section du couvre-câble (13) qui est supportée par la section d'actionnement (14).

5. Véhicule (1) selon la revendication 4, dans lequel la section de support (17), prise parmi les une ou plusieurs sections de support (16, 17, 18), qui est la plus près en termes de distance suivant le câble (11) de la section du couvre-câble (13) qui est supportée par la section d'actionnement (14), fixe le couvre-câble (13) sur le corps de véhicule.

6. Véhicule (1) selon la revendication 4 ou 5, dans lequel la section de support (17, 18), prise parmi les une ou plusieurs sections de support (16, 17, 18), qui est la plus près en termes de distance suivant le câble (11) de la section du couvre-câble (13) qui est supportée par la section d'actionnement (14), est disposée au niveau d'une position qui est différente ou qui est espacée d'un axe d'actionnement de la section d'actionnement (14) dans une direction perpendiculaire à l'axe d'actionnement.

7. Véhicule (1) selon l'une quelconque des revendications 1 à 6, dans lequel l'élément de commande (15) est un élément de commande coulissant.
